# FASCICULE DE BREVET EUROPEEN

(11) **EP 1 196 274 B1**
(45) Date de publication et mention de la délivrance du brevet: **12.11.2003**
(21) Numéro de dépôt: 00949636.5
(22) Date de dépôt: 05.07.2000
(51) Int. Cl.: B29C 45/27, B29C 45/28

(54) **DISPOSITIF D'INJECTION DE MATIERE A L'ETAT PLASTIQUE DANS UNE EMPREINTE DE MOULAGE**
VORRICHTUNG ZUM SPRITZGIESSEN VON PLASTIFIZIERTEM KUNSTSTOFFMATERIAL IN EINEN FORMHOHLRAUM
DEVICE FOR INJECTING MATERIAL IN A PLASTIC STATE INTO A MOULDING CAVITY

(30) Priorité: 06.07.1999 FR 9908699; 28.03.2000 FR 0003892
(43) Date de publication de la demande: 17.04.2002
(73) Titulaire: DELACHAUX S.A., 92230 Gennevilliers (FR)
(72) Inventeur: RAMOND, Louis, F-73000 Chambéry (FR)
(74) Mandataire: Martin, Jean-Jacques
(86) Numéro de dépôt international: FR0001924
(87) Numéro de publication internationale: WO01002151

(56) Documents cités:
- EP-A- 0 873 841
- PATENT ABSTRACTS OF JAPAN vol. 1997, no. 11, 28 novembre 1997 (1997-11-28) -& JP 09 174612 A (VICTOR CO OF JAPAN LTD), 8 juillet 1997 (1997-07-08)

## Description

La présente invention concerne un dispositif d'injection de matière à l'état plastique dans une empreinte de moulage, comportant notamment :
- un distributeur de matière à l'état plastique, comportant au moins une sortie de matière à l'état plastique, disposée suivant un axe déterminé,
- une buse d'injection comportant au moins un composant qui est lié au distributeur par un moyen de solidarisation amovible et définit pour la buse d'injection une face frontale conformée de façon à s'intégrer à l'empreinte de moulage, la buse d'injection comportant au moins un passage de matière à l'état plastique, disposé suivant ledit axe et placé en relation fluidique avec ladite sortie, et débouchant dans ladite face frontale,
- des moyens commandés d'obturation dudit passage.

Elle concerne un tel dispositif quels que soient par ailleurs la conception du distributeur et de la buse d'injection et leur agencement par rapport à un moule définissant l'empreinte de moulage, étant entendu que la position de l'axe commun à la sortie de matière du distributeur et à la buse d'injection et la position de la face frontale de cette dernière par rapport à l'empreinte de moulage s'entendent par référence à un état « chaud » du dispositif d'injection et du moule,- à savoir l'état dans lequel ils se trouvent lorsqu'ils sont portés à la température qu'ils présentent dans les conditions d'injection de la matière, en prenant en compte les phénomènes de dilatation.

Un homme du métier sait qu'il est particulièrement important qu'à chaud, la face frontale de la buse s'intègre aussi parfaitement que possible à l'empreinte de moulage si l'on veut éviter la présence d'un creux ou d'un relief disgracieux, correspondant à cette face frontale, sur la pièce moulée dans l'empreinte. Ce souci est particulièrement important lorsque la forme de l'empreinte, c'est-à-dire la forme de la pièce à mouler, conduit à donner à La face frontale de la buse une forme et une orientation différentes d'une forme plane et perpendiculaire à l'axe commun de la buse et de la sortie de matière.

Dans l'état actuel de la technique, la buse est solidarisée de façon amovible avec le distributeur par vissage mutuel au moyen d'un filetage et d'un taraudage complémentaires aménagés respectivement sur l'un et dans l'autre.

Plus précisément, dans le cas fréquent dans lequel la buse d'injection comporte notamment un embout de buse définissant la face frontale et un corps de buse intercalé entre le distributeur et l'embout de buse et lié à l'un et l'autre par un moyen de solidarisation amovible respectif et dans le cas également fréquent dans lequel le distributeur comporte un passage de montage d'un support de buse d'injection, aménagé suivant l'axe de la sortie de matière, et un support de montage de la buse d'injection, définissant cette sortie et lié au distributeur et à la buse d'injection par un moyen de solidarisation amovible respectif, chacun de ces moyens de solidarisation amovible est constitué par un taraudage et un filetage axés sur l'axe de la sortie de matière et aménagés respectivement dans l'un et sur l'autre des composants à solidariser de façon amovible. Ainsi, dans les systèmes d'injection commercialisés par la Société EPA sous les dénominations « Gamme niveau 3 » et « Gamme niveau 4 », comme dans les systèmes d'injection commercialisés par la Société. INCOE INTERNATIONAL sous la dénomination « DFQ/DFX », les corps de buse sont vissés dans le distributeur. Il en est de même dans le cas des buses d'injection commercialisées par la Société DYNISCO sous la dénomination « Série N », lesquelles comportent en outre un embout vissé dans le corps de buse, ce que l'on retrouve dans les systèmes d'injection commercialisés sous la dénomination « MODULFLOW » par la Société LMR, dans lesquels, par contre, le corps de buse n'est pas vissé directement dans le distributeur mais dans un support de montage lui-même monté dans le distributeur.

Or, ce mode de solidarisation amovible ne donne pas totale satisfaction quant au souci d'intégrer au mieux la face frontale de la buse d'injection à l'empreinte de moulage.

En effet, la relation de vissage, suivant l'axe de la sortie de matière, des différents composants du dispositif d'injection lie directement la position de la face frontale suivant cet axe et son orientation autour de celui-ci.

Certes, par un usinage précis et moyennant l'aménagement de butées limitant le vissage, on peut faire en sorte que la face frontale s'intègre au mieux à l'empreinte lors d'un premier montage de la buse d'injection sur le distributeur, ce qui est déjà délicat mais peut être corrigé par ajustage après le premier montage si l'on prend la précaution de surdimensionner initialement la buse en direction axiale, mais il est pratiquement impossible de retrouver la même conjugaison des positions axiale et angulaire de la face frontale par rapport à l'empreinte lorsqu'on remonte la buse sur le distributeur après un démontage.

Les butées limitant le vissage peuvent avantageusement consister en des portées annulaires planes, de révolution autour de l'axe de la sortie matière, assurant également l'étanchéité entre les différents composants, mais l'étanchéification ainsi obtenue lors d'un premier montage ne se retrouve pas nécessairement lors d'un remontage après démontage. En effet, lors d'un remontage, le souci d'intégrer au mieux la face frontale de la buse à l'empreinte peut être incompatible avec celui d'établir un contact d'étanchéité entre les portées ; en d'autres termes, il est difficile d'étanchéifier durablement le filetage et le taraudage par rapport au passage de matière à l'état plastique, compte tenu de la pression généralement élevée à laquelle se trouve généralement cette matière lorsqu'elle transite par le distributeur et par la buse, et la matière à l'état plastique peut s'insinuer jusqu'au taraudage et au filetage et entraver les démontages et remontages.

Le but de la présente invention est de remédier à ces inconvénients et, à cet effet, la présente invention propose un dispositif du type indiqué en préambule, caractérisé en ce que ledit moyen de solidarisation amovible comporte :
- des moyens d'indexage de la position angulaire de ladite face frontale par rapport au distributeur, autour dudit axe, et
- des moyens de verrouillage fixant ladite face frontale par rapport au distributeur dans la position angulaire relative imposée par les moyens d'indexage.

Plus précisément, lorsque la buse d'injection comporte notamment un embout de buse définissant ladite face frontale et un corps de buse intercalé entre le distributeur et l'embout de buse et lié à l'un et l'autre par un moyen de solidarisation respectif dont l'un, au moins, est un moyen de solidarisation amovible, ce moyen de solidarisation amovible, le cas échéant respectif, comporte, selon l'invention, :
- des moyens d'indexage en position angulaire relative autour dudit axe,
- des moyens de verrouillage mutuel dans la position angulaire relative imposée par les moyens d'indexage.

Ce peut être le cas notamment lorsque, selon un mode de réalisation du dispositif selon l'invention, le distributeur comporte un passage de montage du corps de buse, aménagé suivant ledit axe, et le corps de buse est engagé coaxialement dans ledit passage et définit ladite sortie.

De même, lorsque, selon un autre mode de réalisation, le distributeur comporte un passage de montage d'un support de montage de la buse d'injection, aménagé suivant ledit axe, et un support de montage de la buse d'injection, engagé coaxialement dans ledit passage, définissant ladite sortie et lié au distributeur et à la buse d'injection par un moyen de solidarisation respectif dont l'un, au moins, est un moyen de solidarisation amovible, ce moyen de solidarisation amovible, le cas échéant respectif, comporte selon l'invention :
- des moyens d'indexage en position angulaire relative autour dudit axe,
- des moyens de verrouillage mutuel dans la position angulaire relative imposée par les moyens d'indexage.

Un homme du métier comprendra aisément que, dès lors que le distributeur et la buse, et plus précisément leurs différents composants, et leurs moyens d'indexage ont été convenablement conçus et usinés de telle sorte qu'au premier montage de la buse sur le distributeur, la face frontale puisse s'intégrer au mieux à l'empreinte de moulage, la présence des moyens d'indexage permet de retrouver sans difficulté cette position après chaque démontage de la buse.

Cette conception caractéristique de l'invention se combine avantageusement avec le fait que les étanchéités entre la buse et le distributeur, et plus précisément, dans le cas des modes de réalisation précédemment évoqués, entre l'embout de buse et le corps de buse, le corps de buse et le distributeur ou plus précisément, selon le cas, le corps de buse et le support de montage de la buse, et ce support et le distributeur, s'effectuent par appui mutuel, selon la direction de l'axe de la sortie de la matière, de portées annulaires de révolution autour de cet axe, planes et perpendiculaires à celui-ci, de la même façon que dans l'art antérieur. En effet, l'indépendance que la mise en oeuvre de la présente invention permet d'obtenir entre la position de la face frontale suivant l'axe et sa position angulaire autour de celui-ci permet d'assurer l'étanchéité requise même après démontage et remontage de la buse.

De façon particulièrement simple, les moyens d'indexage peuvent comporter un goupillage parallèle à l'axe de la sortie de matière, lequel goupillage peut être commun aux moyens d'indexage du support de montage de la buse en position angulaire par rapport au distributeur et aux moyens d'indexage de la buse d'injection en position angulaire par rapport au support de montage lorsqu'un tel support de montage est prévu et lié au distributeur par un moyen de solidarisation comportant de tels moyens d'indexage et des moyens de verrouillage mutuel dans la position angulaire relative imposée par ces moyens d'indexage.

Les moyens de verrouillage mutuel peuvent quant à eux comporter avantageusement un bridage mutuel par bague annulaire de révolution autour de l'axe de la sortie de matière, ladite bague étant vissée par rotation autour de celui-ci sur une bride de l'un des composants à assembler en emprisonnant avec celle-ci une bride de l'autre composant ; on observera que, de façon recherchée conformément à la présente invention, le degré de vissage de la bague reste sans influence sur la position axiale et la position angulaire de la face frontale, et conditionne simplement la force d'appui mutuel, suivant l'axe, des portées d'étanchéité précitées.

Lorsque, de façon connue en elle-même, les moyens commandés d'obturation comportent au moins une aiguille d'obturation montée au coulissement axial à l'intérieur du passage de la buse d'injection, entre une position d'obturation de celui-ci et une position d'ouverture de celui-ci, et des moyens commandés pour faire coulisser l'aiguille de l'une à l'autre desdites positions, situés à l'opposé de la buse d'injection par rapport au distributeur suivant ledit axe et comportant des moyens moteurs commandés, un organe de transmission de mouvement entre les moyens moteurs et l'aiguille, disposé dans le prolongement axial de celle-ci, et un moyen de solidarisation amovible dudit organe et de l'aiguille dans une direction axiale, autorisant une libre rotation relative autour dudit axe, le dispositif selon l'invention comporte avantageusement des moyens d'indexage de l'aiguille par rapport au distributeur dans une position angulaire relative prédéterminée autour dudit axe, par exemple sous forme d'un clavetage parallèle à celui-ci.

Par exemple, lorsque le montage de la buse d'injection sur le distributeur s'effectue par l'intermédiaire d'un support de montage selon un mode de réalisation évoqué plus haut, les moyens d'indexage de l'aiguille par rapport au distributeur, par exemple un clavetage parallèle à l'axe, sont avantageusement constitués par des moyens d'indexage de l'aiguille par rapport au support de montage de la buse d'injection. Lorsque, selon un autre mode de réalisation évoqué plus haut, la buse comporte un corps de buse engagé coaxialement dans un passage de montage prévu dans le distributeur, les moyens d'indexage de l'aiguille par rapport au distributeur, par exemple par clavetage parallèle à l'axe, sont avantageusement constitués par des moyens d'indexage de l'aiguille par rapport au corps de buse.

Ainsi, on est assuré de ce que l'aiguille d'obturation occupe également une position angulaire prédéterminée non seulement au premier montage de la buse sur le distributeur mais également après un démontage suivi d'un remontage, c'est-à-dire coopère toujours par les mêmes zones avec les mêmes zones de la buse, notamment avec une contrepartie prévue sur cette dernière pour assurer l'obturation par coopération avec l'aiguille.

En outre, cet indexage de l'aiguille d'obturation, en immobilisant celle-ci à l'encontre d'une rotation par rapport au distributeur, permet d'assurer la liaison de l'aiguille avec l'organe de transmission de mouvement par un moyen vissé coaxialement sur ou dans l'aiguille, respectivement un prolongement solidaire de celle-ci, sans rencontrer pour autant de difficulté pour visser ou dévisser ce moyen lors des opérations de montage initial et de maintenance.

Cependant, une telle disposition est particulièrement avantageuse lorsque, pour éviter la formation d'une carotte d'injection sur la pièce moulée dans l'empreinte, l'aiguille d'obturation présente une face frontale conformée de façon à s'intégrer à l'empreinte de moulage en position d'obturation, de façon connue en elle-même. En effet, on est alors assuré de ce que, lors du montage initial et de tout remontage après démontage, la face frontale de l'aiguille soit convenablement orientée, au même titre que la face frontale de la buse, pour s'intégrer au mieux à l'empreinte.

Une telle disposition est également particulièrement intéressante lorsque, de façon connue en elle-même, pour pratiquer une injection multi- matière, le passage de la buse d'injection est subdivisé en plusieurs passages élémentaires distincts qui sont répartis angulairement autour de l'axe et dont chacun correspond à l'une des matières à injecter et peut être obturé ou ouvert de façon commandée par une aiguille respective, les différentes aiguilles correspondant aux différents passages élémentaires étant mutuellement juxtaposées le long d'un plan incluant l'axe ou de demi-plans définis par celui-ci. Naturellement, dans un tel cas, le distributeur comporte plusieurs sorties de matière réparties autour d'un axe qui est celui de la buse.

D'autres caractéristiques et avantages de l'invention ressortiront de la description ci-dessous, relative à l'exemple actuellement préféré de mise en oeuvre, ainsi que des dessins annexés qui font partie intégrante de cette description.

La figure 1 montre une vue partielle d'un dispositif d'injection selon l'invention, monté sur un moule, en coupe par un plan incluant l'axe commun de la sortie de matière du distributeur et de la buse d'injection.

Les figures 2a et 2b montrent, en une vue en coupe suivant un plan perpendiculaire au dit axe et repéré en II-II à la figure 1, respectivement le support de buse d'injection et le corps de buse d'injection.

Les figures 3a et 3b montrent, en une vue en coupe suivant un plan perpendiculaire audit axe et repéré en III-III à la figure 1, respectivement le corps de buse et l'embout de buse.

La figure 4 montre, en une vue en coupe suivant un plan perpendiculaire au dit axe et repéré en IV-IV, une pièce d'indexage de l'aiguille d'obturation par rapport au support de montage de la buse sur le distributeur.

La figure 5 montre une variante de réalisation d'un détail repéré en V à la figure 1, en une vue analogue à celle de cette figure 1.

La figure 6 montre une variante de réalisation d'un détail repéré en VI à la figure 1, en une vue analogue à celle de cette figure 1.

Seuls ont été illustrés et décrits les composants utiles à la compréhension du dispositif selon l'invention dans cet exemple de mise en oeuvre, étant bien entendu que cet exemple ne peut en aucune façon être considéré comme limitatif.

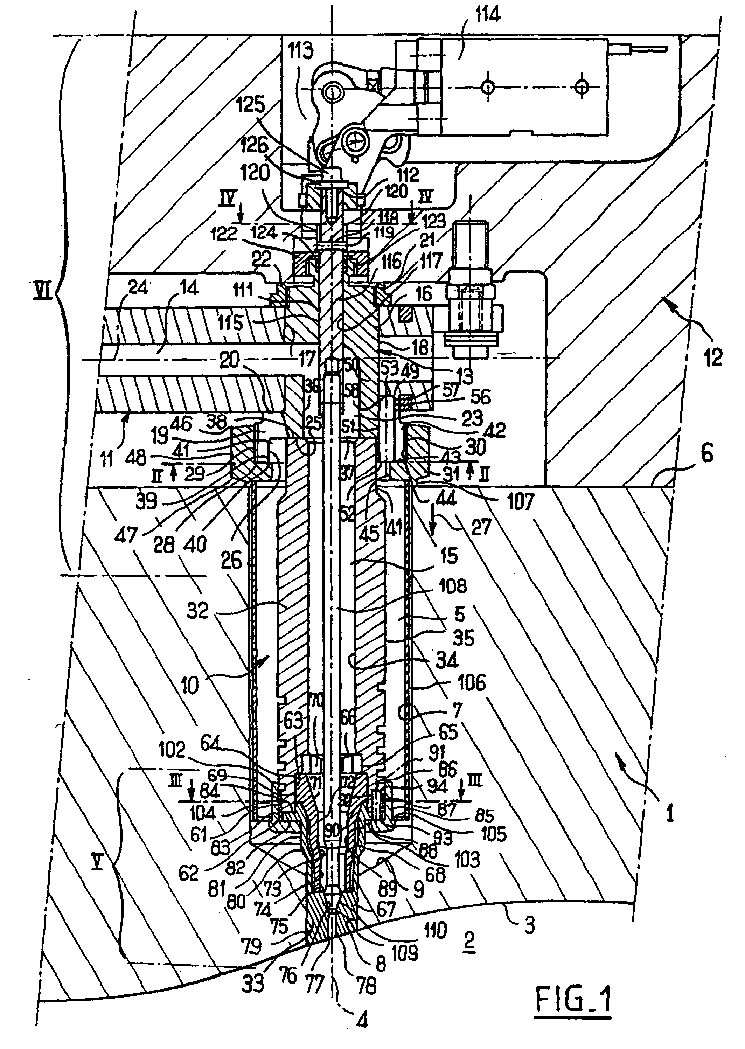

On décrira en premier lieu le dispositif selon l'invention tel qu'illustré aux figures 1 à 4, auxquelles on se référera à cet effet.

A la figure 1, on a illustré en 1 un moule délimitant une empreinte de moulage 2 par une face 3 qui, dans cet exemple, est courbe mais pourrait également être plane. Suivant un axe d'injection 4 occupant une position prédéterminée par rapport au moule 1 est aménagé dans celui-ci un puits d'injection 5 qui débouche suivant l'axe 4 d'une part dans la face 3 et d'autre part dans une face 6 du moule 1, opposée à la face 3 suivant l'axe d'injection 4. La face 6 est plane et perpendiculaire à l'axe 4, alors que, même considérée à proximité immédiate de cet axe 4, la face 3 présente par rapport à celui-ci une orientation oblique, étant bien entendu que la face 3 pourrait également être perpendiculaire à l'axe 4 à proximité immédiate de celui-ci.

Dans l'exemple illustré, le puits d'injection 5 est délimité sur la majeure partie de sa dimension axiale, à partir de la face 6, par une face périphérique intérieure 7 cylindrique de révolution autour de l'axe 4 avec un diamètre comparativement grand alors qu'il est délimité sur une partie moindre de sa dimension axiale, à partir de la face 3, par une face périphérique intérieure 8 également cylindrique de révolution autour de l'axe 4 mais avec un diamètre sensiblement inférieur à celui de la face 7 ; ces deux faces 7 et 8 sont raccordés mutuellement par une face périphérique intérieure 9 tronconique de révolution autour de l'axe 4 avec une convergence dans un sens 27 de l'axe 4 allant de la face 6 vers la face 3.

A l'intérieur du puits 5 est logée coaxialement une buse d'injection 10 portée de façon solidaire et amovible par un distributeur 11 de matière à injecter, portée et maintenue dans un état plastique préalablement à son introduction dans le distributeur 11 par des moyens non représentés et jusqu'à son arrivée dans l'empreinte 2 par l'intermédiaire de la buse d'injection 10.

Le distributeur 11 est monté sur une semelle 12 fixée sur la face 6 du moule 1 par des moyens non représentés, dans des conditions telles que le distributeur 11 puisse subir une dilatation par rapport à la semelle 12 et au moule 1 lors de sa montée en température au début d'une opération d'injection, dans des conditions propres à assurer la coaxialité précitée de la buse 10 et du puits d'injection 5 lorsque le distributeur 11, le moule 1 et la semelle 12 se sont stabilisés à la température qu'ils présentent pendant un processus d'injection.

Par la suite, on considérera que ces conditions sont respectées, c'est-à-dire que la buse 10 est coaxiale au puits 5, dont l'axe 4 sera par conséquent considéré comme celui de la buse 10.

Les modes de montage du distributeur 11 sur la semelle 12 et de la semelle 12 sur la face 6 du moule 1, à cet effet, sont connus d'un homme du métier et extérieurs à la présente invention, si bien qu'ils ne seront pas décrits davantage.

Le distributeur 11 porte la buse 10 par l'intermédiaire d'un support 13 de montage de celle-ci, lequel assure en outre une liaison fluidique entre un passage 14 de distribution de matière à l'état plastique, aménagé dans le distributeur 11, et un passage 15 de transit de celle-ci du distributeur 11 vers l'intérieur de l'empreinte 2, aménagé dans la buse 10 suivant l'axe 4 et débouchant suivant cet axe, vers l'intérieur de l'empreinte 2, dans une face frontale 78 de la buse 10.

Le support de montage 13 est emboîté suivant l'axe 4 dans le distributeur 11 qui, à cet effet, est percé de part en part, suivant cet axe 4, d'un trou 16 délimité par une face périphérique intérieure 17 cylindrique de révolution autour de l'axe 4.

Le trou 16 traverse de part en part le passage 14, de chaque côté duquel se trouve une partie de la face 17.

Complémentairement, le support de montage 13 présente une face périphérique extérieure 18 cylindrique de révolution autour de l'axe 4 avec un diamètre sensiblement identique à celui de la face 17 de façon à permettre un emboîtement coaxial, sans jeu, du support 13 dans le trou 16 du distributeur 11.

Du côté de l'empreinte 2, qui est également celui de la buse 10, par rapport au distributeur 11 suivant l'axe 4, le support de montage 13 présente solidairement une bride 19 annulaire de révolution autour de l'axe 4 et formant une saillie par rapport à la face 18 dans le sens d'un éloignement par rapport à cet axe, laquelle bride 19 est délimitée vers le distributeur 11 par une face plane 20, annulaire de révolution autour de l'axe 4 et formant par rapport à la face 18 un épaulement qui s'appuie à plat, autour du trou 16, contre le distributeur 11, en sens opposé au sens 27.

De l'autre côté du distributeur 11 suivant l'axe 4, c'est-à-dire à l'opposé de l'empreinte 2 et de la buse 10, la face 18 du support de montage 13 forme saillie suivant l'axe 4 et présente un filetage 21 sur lequel est vissée une bague 22 annulaire de révolution autour de l'axe 4, laquelle bague 22 prend appui à plat dans le sens 27 sur le distributeur 11 autour du trou 16, à l'opposé de la face en épaulement 20 du support de montage 13, pour solidariser de façon amovible celui-ci avec le distributeur 11, dans la position illustrée à la figure 1.

Dans cette position, un passage coudé 23 aménagé dans le support 13 débouche d'une part à l'intérieur du passage 14 du distributeur 11, par exemple suivant un axe 24 orienté à angle droit par rapport à l'axe 4, et d'autre part, suivant cet axe 4, vers l'empreinte 2 pour établir la communication fluidique entre le passage 14 du distributeur 11 et le passage 15 de la buse 10. La partie du passage coudé 23 du support 13 qui est orientée suivant l'axe 4 définit ainsi une sortie de la matière à l'état plastique venant du distributeur 11 vers le passage 15 de la buse 10.

Plus précisément, vers l'empreinte 2, le passage 23 débouche à l'intérieur d'une face annulaire, plane 25 de révolution autour de l'axe 4 auquel elle est perpendiculaire, laquelle face 25 est tournée dans le sens 27 et définit un siège d'étanchéité avec la buse 10, comme il apparaîtra ultérieurement.

La face 25 se prolonge, dans le sens d'un éloignement par rapport à l'axe 4, jusqu'à se raccorder avec une face périphérique intérieure 26 de la bride 19, laquelle face 26 est cylindrique de révolution autour de l'axe 4 et se raccorde elle-même, dans le sens 27, à une face 28 annulaire, plane, de révolution autour de l'axe 4 auquel elle est perpendiculaire, laquelle face 28 délimite la bride 19 vers l'empreinte 2.

Dans le sens d'un éloignement par rapport à l'axe 4, les deux faces 20 et 28 de la bride 9 se raccordent à une face périphérique extérieure 29 de celle-ci, laquelle est cylindrique de révolution autour de l'axe 4 et porte un filetage 30 par lequel la bride 19 porte une bague annulaire 31 de révolution autour de l'axe 4, servant à la fixation solidaire mais amovible de la buse 10 sur le support 13 et, par l'intermédiaire de celui-ci, sur le distributeur 11.

Plus précisément, dans l'exemple illustré, de façon connue en elle-même, la buse 10 est essentiellement formée de l'assemblage solidaire, mais amovible, d'un corps de buse 32, qui constitue sa partie la plus proche du distributeur 11 et du support de montage 13 et représente la majeure partie de sa dimension suivant l'axe 4, et d'un embout de buse 33 qui raccorde ce corps de buse 32 à l'empreinte 2.

La bague 31 assure alors la fixation solidaire mais amovible du corps de buse 32 sur le support de montage 13.

Le corps de buse 32 présente une forme générale tubulaire de révolution autour de l'axe 4, définie notamment par une face périphérique intérieure 34 pour l'essentiel cylindrique de révolution autour de l'axe 4 et délimitant la partie correspondante du passage 15, et par une face périphérique extérieure 35 également pour l'essentiel cylindrique de révolution autour de l'axe 4.

La face périphérique extérieure 35 du corps 32 présente un diamètre courant inférieur à celui de la face périphérique intérieure 7 du puits 5, dans lequel le corps 32 pénètre sur une dimension axiale, en référence à l'axe 4, inférieure à celle de cette face 7 de façon à être intégralement placé en retrait vers le distributeur par rapport à la face 9 de transition entre les faces 7 et 8 du puits 5.

La face périphérique intérieure 34 du corps 32 présente quant à elle un diamètre courant légèrement inférieur à celui d'une face périphérique intérieure 36, cylindrique de révolution autour de l'axe 4, qui délimite le passage 23 du support 13 à son embouchure dans la face 25 de celui-ci, c'est-à-dire à la sortie de matière à l'état plastique du distributeur 11 , mais, dans une zone extrême étroitement localisée, au raccordement entre la buse 10 et le support de montage 13, la face 34 présente un évasement 37 tronconique de révolution autour de l'axe 4 jusqu'au diamètre de la face 36 du passage 23 pour se raccorder avec ce diamètre à une face annulaire, plane 38, de révolution autour de l'axe 4 auquel elle est perpendiculaire.

Cette face 38 est tournée en sens opposé au sens 27 et, par elle, le corps de buse 32 s'appuie à plat contre la face 25 du support 13 ; la face 38 crée sur le corps 32 un siège d'étanchéité complémentaire de celui que crée la face 25 du support de montage 13 pour établir un appui mutuel étanche du corps de buse 32 et du support de montage 13 autour du passage 23 et 15 d'une part, et fixer la position du corps de buse 32 par rapport au support de montage 13 et par rapport au distributeur 11 suivant l'axe 4, d'autre part.

Dans le sens d'un éloignement par rapport à l'axe 4, la face 38 se raccorde à une face périphérique extérieure 39 cylindrique de révolution autour de l'axe 4 avec un diamètre sensiblement identique à celui de la face 26 de telle sorte que, par les faces 38 et 39, le corps de buse 32 s'emboîte aussi précisément que possible dans le support de montage 13, par les faces 25 et 26 de celui-ci.

A l'opposé de son raccordement avec la face 38 suivant l'axe 4, à savoir dans le sens 27, la face 39 se raccorde à une face annulaire, plane 40 du corps de buse 32, laquelle est annulaire de révolution autour de l'axe 4 auquel elle est perpendiculaire et est espacée de la face 38, suivant l'axe 4, d'une distance légèrement supérieure à celle qui sépare suivant cet axe les faces 25 et 28 de telle sorte que la face 40 soit légèrement décalée dans le sens 27 par rapport à la face 28.

Par cette face 40, la face périphérique extérieure 39 se raccorde à une zone extrême 41, comparativement rétrécie, de la face périphérique extérieure 35 du corps de buse 32, si bien que les faces 38, 39 et 40 définissent autour de la zone rétrécie 41 de la face périphérique extérieure 35 du corps de buse 32 une bride 41 annulaire de révolution autour de l'axe 4 et servant à la solidarisation du corps de buse 32 avec le support de montage 13 au moyen de la bague 31.

A cet effet, celle-ci présente une face périphérique intérieure 42 cylindrique de révolution autour de l'axe 4 et munie d'un taraudage 43 complémentaire du filetage 30 de la face périphérique extérieure 29 du support de montage 13 pour se visser sur celui-ci et, dans le sens 27, cette face périphérique extérieure 42 se raccorde à une face annulaire, plane 44,de révolution autour de l'axe 4 auquel elle est perpendiculaire en étant tournée dans le sens opposé au sens 27.

Dans le sens d'un rapprochement vis-à-vis de l'axe 4, cette face 44 se raccorde à une face périphérique intérieure 45 de la bague 31, cette face 45 étant cylindrique de révolution autour de l'axe 4 avec un diamètre inférieur au diamètre commun des faces 26 et 39 mais supérieur à celui de la face 35 notamment dans sa zone rétrécie 41, si bien que la face 44 est située en regard de la face 28 du support de montage 13 et d'une zone marginale de la face 40 de la bride 41 de la buse 10.

Ainsi, le vissage de la bague 31 sur le support de montage 13 se traduit par l'emprisonnement de la bride 41 entre les faces 44 et 25 et l'application, à force, de la face 38 sur cette face 25.

La forme de la bague 31 est par ailleurs indifférente au regard de la présente invention. Sa face périphérique intérieure 42, en sens opposé au sens 27, et sa face périphérique intérieure 45, dans le sens 27, se raccordent à une face frontale respective 46, 47 annulaire de révolution autour de l'axe 4 et, dans le sens d'un éloignement par rapport à cet axe 4, ces deux faces frontales 46, 47 se raccordent à une face périphérique extérieure 48 qui peut être formée de plusieurs pans lui donnant une section polygonale, par exemple hexagonale, lorsqu'elle est vue en coupe par un plan perpendiculaire à l'axe 4, pour offrir prise à une clé de vissage et dévissage de la bague 31.

Afin de donner au support de montage 13, par rapport au distributeur 11, et au corps de buse 32, par rapport au support de montage 13 et au distributeur 11, une orientation déterminée autour de l'axe 4 lors du montage de la buse 10 sur le distributeur 11 puis lors de chaque remontage après démontage, des moyens d'indexage en position angulaire relative autour de l'axe 4 sont prévus conformément à la présente invention, dans l'exemple illustré sous forme d'une goupille 49 d'axe 50 parallèle à l'axe 4 et fixe par rapport à la bride 41 du corps de buse 10, à la bride 19 du support de montage 13 et au distributeur 11.

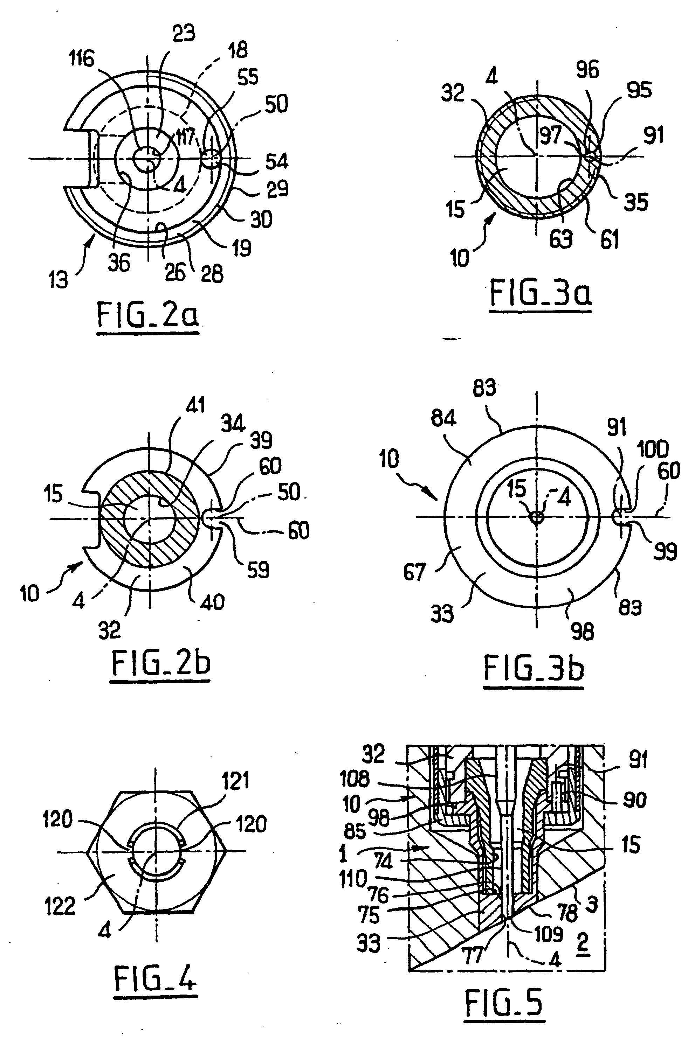

Plus précisément, dans l'exemple illustré dans lequel la goupille 49 est délimitée dans le sens d'un éloignement par rapport à l'axe 50 par une face périphérique extérieure 51 cylindrique de révolution autour de l'axe 50, entre deux faces extrêmes 52 et 53 planes et perpendiculaires à l'axe 50,tournées respectivement dans le sens 27 et en sens opposé, la bride 19 du support de montage 13 est percée de part en part, suivant l'axe 50, d'un trou 54 qui, comme le montre la figure 2a, est délimité par une face périphérique intérieure 55 cylindrique de révolution autour de l'axe 50 avec un diamètre sensiblement identique à celui de la face périphérique extérieure 51 de la goupille 49.

Ainsi, l'engagement coaxial de la goupille 49 dans le trou 54 immobilise la goupille 49, dans toute direction perpendiculaire à l'axe 50, par rapport au support de montage 13.

Le diamètre de la face périphérique intérieure 26 de la bride 19 du support de montage 13 étant supérieur à celui de la face périphérique extérieure 18 de celui-ci, l'axe 50 est situé à une distance de l'axe 4 intermédiaire entre les rayons respectifs des faces 18 et 26, de façon à être situé entre ces dernières, à une même distance de l'une et de l'autre.

Cette distance correspond au rayon commun des faces 51 et 55, si bien que la goupille 49, qui dépasse de part et d'autre du trou 54 suivant l'axe 50, est tangente par sa face périphérique extérieure 51 d'une part à la face 18 du support de montage 13 par une zone extrême en saillie par rapport à la face 20 en sens opposé au sens 27 et d'autre part à la face 26 de la bride 19 du support de montage 13 par une zone extrême en saillie par rapport à la face 25 dans le sens 27.

Pour recevoir la zone extrême de la goupille 49 qui fait saillie hors de la bride 19 par la face 20, le distributeur 11 est percé suivant l'axe 50, dans la zone non référencée d'appui de la face 20 de la bride 19, d'un trou borgne 56 débouchant dans le sens 27 et délimité d'une part par une face périphérique intérieure 57 cylindrique de révolution autour de l'axe 50 avec un diamètre sensiblement identique à celui de la face périphérique extérieure 51 de la goupille 49, et d'autre part par un fond 58 plan, perpendiculaire à l'axe 4.

Pour recevoir l'autre zone extrême de la goupille 49, en saillie hors de la bride 19 par la face 25 de celle-ci, la bride 41 du corps de buse 32 est quant à elle percée de part en part suivant l'axe 50, c'est-à-dire de l'une à l'autre de ses faces 38 et 40, d'une encoche 59 qui, comme le montre la figure 2b, débouche également dans la face périphérique extérieure 39. En effet, l'encoche 59 est délimitée par une face périphérique intérieure 60 qui, entre l'axe 50 et l'axe 4, présente une zone hémicylindrique de révolution autour de l'axe 50 avec un diamètre sensiblement identique à celui de la face périphérique 55 du trou 54 et à celui de la face périphérique extérieure 51 de la goupille 49, cette zone hémicylindrique se raccordant à la face périphérique extérieure 39 par deux zones planes, parallèles à un plan 60 défini par les axes 4 et 50, mutuellement symétriques par rapport à ce plan 60 et mutuellement espacées d'une distance égale au diamètre de la zone hémicylindrique.

Suivant l'axe -50, entre ses faces 52 et 53, la goupille 49 présente une dimension sensiblement égale à la distance séparant mutuellement, suivant l'axe 4, le fond 58 du trou borgne 56 du distributeur 11 et la face 28 de la bride 19 du support de montage 13 lorsque celui-ci s'applique par sa face 20 contre le distributeur 11 de telle sorte que, lorsque la bague 31 est vissée sur le support de montage 13 suffisamment pour plaquer l'une contre l'autre les faces 38 et 25 et que la bague 22 est suffisamment vissée sur le support de montage 13 pour plaquer celui-ci par sa face 20 contre le distributeur 11, la goupille 49 retenue entre la face 44 de la bague 31 et le fond 58 du trou borgne 49 soit engagée au moins partiellement dans le trou borgne 56 et l'encoche 59 en traversant de part en part la bride 19 du support de montage 13 par le trou 55, ce qui assure l'alignement mutuel de l'encoche 59, du trou 55 et du trou borgne 56 et fixe ainsi la position angulaire relative, autour de l'axe 4, du corps de buse 32, du support de montage 13 et du distributeur 11.

Une disposition analogue est adoptée, conformément à la présente invention, pour l'assemblage de l'embout 33 sur le corps de buse 32 dans une position angulaire relative déterminée, autour de l'axe 4.

En vue de cet assemblage, dans une zone extrême dans le sens 27, la face périphérique extérieure 35 du corps de buse 10 est munie d'un filetage 61 d'axe 4, et se raccorde à une face frontale 62 du corps 32, laquelle est annulaire de révolution autour de l'axe 4, plane et perpendiculaire à celui-ci, et tournée dans le sens 27.

Vers l'axe 4, cette face 62 se raccorde à une zone extrême 63 de la face périphérique intérieure 34 de la buse 10, laquelle zone extrême 63 est cylindrique de révolution autour de l'axe 4 avec un diamètre supérieur à celui de la face 34 bien qu'inférieur à celui de la face 35. Cette zone élargie 63 raccorde la face annulaire 62 à une autre face annulaire 64, de révolution autour de l'axe 4, plane et perpendiculaire à celui-ci, tournée dans le sens 27 et propre à constituer une portée d'étanchéité pour l'embout 33.

Cette face 64 se raccorde elle-même, par un gradin 65, au reste de la face 34.

Le gradin 65, étranger à la présente invention, ne sera pas décrit davantage et l'on indiquera simplement qu'il a pour rôle de permettre l'emboîtement dans le corps de buse 32 et la retenue, par l'embout 33, d'une bague 66 ajourée pour constituer le moins possible d'obstacle au passage de la matière à l'état plastique. Cette bague 66 est également étrangère à la présente invention et ne sera pas décrite davantage. Son rôle, bien connu d'un homme du métier, sera simplement évoqué ultérieurement.

L'embout 33 est, dans l'exemple illustré, constitué de deux pièces présentant chacune, pour l'essentiel, une symétrie de révolution autour de l'axe 4, à raison d'une pièce extérieure 67 et d'une pièce intérieure 68 formant un chemisage emmanché coaxialement dans la pièce 67. Ces deux pièces pourraient être remplacées par une pièce unique et seront considérées comme telles par la suite ; en particulier, on ne fera pas de nuance entre les faces ou parties de face de l'embout 33 qui sont définies respectivement par l'une et l'autre de ces pièces 67, 68.

L'embout 33 est conçu pour s'emboîter dans le corps de buse 32 par la face 63 de celui-ci et, à cet effet, présente une face périphérique extérieure 69 cylindrique de révolution autour de l'axe 4 avec un diamètre sensiblement égal à celui de la face 63.

En sens opposé au sens 27, la face 69 se raccorde à une face annulaire plane 70, de révolution autour de l'axe 4 auquel elle est perpendiculaire, cette face 70 étant tournée en sens opposé au sens 27 et raccordant la face périphérique extérieure 69 à une face périphérique intérieure 71 tronconique de révolution autour de l'axe 4 et se rétrécissant dans le sens 27, d'un diamètre qui correspond sensiblement au diamètre courant de la face 34, au raccordement mutuel des faces 70 et 71, à un diamètre inférieur au diamètre courant de la face 34, au raccordement de la face périphérique intérieure tronconique 71 avec une face périphérique intérieure 72 cylindrique de révolution autour de l'axe 4.

Cette face 72 se raccorde elle-même dans le sens 27 à une autre face périphérique intérieure 73 tronconique de révolution autour de l'axe 4 avec une convergence dans le sens 27 et assurant la transition avec une face périphérique intérieure 74 à nouveau cylindrique de révolution autour de l'axe 4 avec un diamètre inférieur à celui de la face 72.

Dans le sens 27, cette face périphérique intérieure 74 se raccorde à une face -annulaire 75, de révolution autour de l'axe 4, plane et tournée en sens opposé au sens 27, laquelle face 75 se raccorde, dans le sens d'un rapprochement par rapport à l'axe 4, à une face périphérique 76 tronconique de révolution autour de l'axe 4 avec une convergence dans le sens 27.

La face 76 se raccorde elle-même, dans le sens 27, à une face périphérique intérieure 77 cylindrique de révolution autour de l'axe 4 avec un diamètre inférieur à celui de la face 74, laquelle face 77 débouche vers l'empreinte 2 dans la face frontale 78, qui est en effet une face de l'embout 33 et présente une forme et une orientation telles que, à la température de fonctionnement, elle s'intègre aussi exactement que possible à la face 3.

Dans le sens d'un éloignement par rapport à l'axe 4, la face frontale 78 se raccorde à une face périphérique extérieure 79 de l'embout 33, laquelle est cylindrique de révolution autour de l'axe 4 et présente un diamètre sensiblement identique à celui de la face périphérique intérieure 8 du puits 5.

Cette face 79 relie la face 78, en sens opposé au sens 27, à une face périphérique extérieure 80 tronconique de révolution autour de l'axe 4 avec une convergence tournée dans le sens 27 ; la face 79 présente parallèlement à l'axe 4 une dimension suffisante pour que la face 80 soit située en retrait, c'est-à-dire décalée en sens opposé au sens 27, par rapport à la face 9 du puits 5.

La face 80 relie ainsi la face 79 à une autre face périphérique extérieure 81, également cylindrique de révolution autour de l'axe 4 mais avec un diamètre supérieur à celui de la face 79, bien qu'inférieur à celui de la face 69, laquelle face 81 se raccorde dans le sens opposé au sens 27 à une face 82 annulaire de révolution autour de l'axe 4, plane et perpendiculaire à celui-ci, tournée dans le sens 27.

Cette face 82 relie la face 81 à une face périphérique extérieure 83, cylindrique de révolution autour de l'axe 4 avec un diamètre supérieur aux diamètres respectifs des faces 81 et 69 et légèrement inférieur au diamètre courant de la face périphérique 35 du corps 32, c'est-à-dire à celui du filetage 61.

Dans ce sens 27, la face 83 se raccorde à une face 84 annulaire de révolution autour de l'axe 4, plane et perpendiculaire à celui-ci, laquelle face 84 est tournée en sens opposé au sens 27 et raccorde la face 83 à la face 69, en constituant autour de l'embout 33, avec les faces 82 et 83, une bride 98 annulaire de révolution autour de l'axe 4. La face 84 est ainsi placée en regard de la face 62 du corps 32, toutefois sans contact avec cette dernière dans la mesure où, suivant l'axe 4, la face 69 présente entre les faces 84 et 70 une dimension légèrement supérieure à celle qui sépare, suivant cet axe 4, la face 62 de la face 64.

Ainsi, on peut emboîter l'embout de buse 33 dans le corps de buse 32 jusqu'à amener sa face 70 en appui d'étanchéité contre la face 64 du corps 32, les faces 63 et 69 étant placées en contact de guidage au coulissement mutuel suivant l'axe 4 et les faces 62 et 69 étant mutuellement écartées suivant l'axe 4 bien qu'étant situées à proximité l'une de l'autre.

Pour assurer l'embout 33 dans une telle position par rapport au corps 32 est vissée sur le filetage 61 une bague de serrage 85 qui présente à cet effet une face périphérique intérieure 86 cylindrique de révolution autour de l'axe 4 avec un diamètre sensiblement identique au diamètre courant de la face périphérique extérieure 35 du corps 32, cette face 86 étant munie d'un taraudage 87 complémentaire du filetage 61 du corps 35 pour venir en prise avec ce dernier.

Dans le sens 27, la face périphérique intérieure de la bague de serrage 85 se raccorde à une face 88 de celle-ci, annulaire de révolution autour de l'axe 4, plane et perpendiculaire à celui-ci et tournée en sens opposé au sens 27, laquelle face 88 raccorde la face 86, dans le sens d'un rapprochement vis-à-vis de l'axe 4, à une face périphérique intérieure 89 cylindrique de révolution autour de l'axe 4 avec un diamètre sensiblement identique à celui de la face périphérique extérieure 81 de l'embout 33.

Ainsi, en vissant la bague 85 sur le corps 32 par le filetage 61 et le taraudage 87, en emprisonnant la bride 98 entre la bague 85 et le corps 32, on amène la face 70 de l'embout 33 en butée contre la face 64, ce qui assure d'une part l'étanchéité relative et d'autre part fixe la position de l'embout 33 par rapport au corps 32 suivant l'axe 4, ce qui complète l'effet précité de positionnement précis du corps de buse 32 suivant l'axe 4 par rapport au distributeur 11 pour placer l'embout 33, notamment la face frontale 78, dans une position précise, suivant l'axe 4, par rapport au distributeur 11. En outre, l'embout 33 assure alors la retenue de la bague 66 dans le gradin 65.

Lors de ce vissage, il est particulièrement important que l'embout 33 conserve par rapport au corps 32, autour de l'axe 4, une orientation telle que la face frontale 78 s'intègre au mieux à la face 3 du moule 1.

Pour assurer une telle orientation au montage, comme au remontage après démontage, de la buse 10 par rapport au distributeur 11, on prévoit conformément à la présente invention un indexage de l'embout 33 en orientation autour de l'axe 4 par rapport au corps de buse 32, lequel indexage complète l'indexage du corps 32 par rapport au support de montage 13 et l'indexage du support de montage 13 par rapport au distributeur 11, assuré par la goupille 49, pour assurer le positionnement angulaire correct de l'embout 33.

Dans l'exemple illustré, cet indexage est également assuré par une goupille 90 d'axe 91 parallèle à l'axe 4, laquelle goupille 90 présente une face périphérique 92 cylindrique de révolution autour de l'axe 91 entre deux faces extrêmes 93 et 94 planes et perpendiculaires à cet axe.

Pour recevoir la goupille 90, comme le montre la figure 3a, le corps de buse 10 est percé dans sa face 62, entre la face 63 et le filetage 61 de sa face 35, d'un trou borgne 95 d'axe 91, lequel trou borgne est délimité par une face périphérique intérieure 96 cylindrique de révolution autour de l'axe 91 avec un diamètre sensiblement identique à celui de la face périphérique extérieure 92 de la goupille 90, et par un fond 97 plan et perpendiculaire à l'axe 91, ce qui permet d'immobiliser la goupille 91 par rapport au corps de buse 32 dans toute direction perpendiculaire à l'axe 91.

Comme le montre la figure 3b, l'embout de buse 33, ou plus précisément la pièce 67 de celui-ci qui définit les faces 82, 83, 84, constituant autour de l'embout 33 la bride 98 coopérant avec la face 88 de la bague de serrage 85 pour assurer la fixation de l'embout 33 sur le corps de buse 32, présente une encoche 99 qui traverse la bride 98 de part en part, c'est-à-dire de l'une à l'autre des faces 82 et 84, suivant l'axe 91.

Cette encoche 99 est délimitée par une face périphérique intérieure 100 qui, dans une zone tournée vers l'axe 4, est hémi- cylindrique de révolution autour de l'axe 91 avec un diamètre sensiblement identique à celui de la face périphérique extérieure 92 de la goupille 90 alors qu'elle présente par ailleurs deux zones planes qui raccordent cette zone hémi- cylindrique à la face périphérique extérieure 83 dans laquelle débouche l'encoche 99. Ces deux zones planes sont parallèles au plan 60 précité, dans lequel l'axe 91 est situé dans cet exemple comme les axes 54, et sont mutuellement symétriques par rapport à ce plan 60 en étant espacées mutuellement, perpendiculairement à celui-ci, d'une distance qui correspond au diamètre de la zone hémi- cylindrique.

Suivant son axe 91, entre ses faces extrêmes 93 et 94, la goupille 90 présente une dimension sensiblement identique au cumul des dimensions respectives du trou 95 et de la bride 98, entre ses faces 82 et 84, parallèlement à l'axe 4 de telle sorte qu'en toute circonstance, dès lors que la bague de serrage 85 est vissée à fond sur le corps de buse 32 en emprisonnant la bride 98, la goupille 91 que la face 88 de la bague 85 et le fond 97 du trou borgne 95 empêchent de s'échapper soit en permanence placée au moins pour partie dans le trou borgne 95 et au moins pour partie dans l'encoche 99.

Comme la bague de serrage 31, la bague de serrage 85 peut présenter toute forme désirée en dehors de ses faces 86 et, 88, 89.

Dans l'exemple illustré, les faces 86 et 89 se raccordent, respectivement en sens opposé au sens 27 et dans le sens 27, à une face frontale respective 102, 103, annulaire de révolution autour de l'axe 4, plane et perpendiculaire à celui-ci, les deux faces frontales 102 et 103 se raccordant, dans le sens d'un éloignement par rapport à l'axe 4, à une face périphérique extérieure 104 par exemple cylindrique de révolution autour de l'axe 4 avec un diamètre inférieur à celui de la face périphérique intérieure 7 du puits 5.

Comme il est illustré, la face 104 peut présenter un épaulement 105, annulaire de révolution autour de l'axe 4, pour retenir sur la face frontale 47 de la bague 31 une enveloppe tubulaire 106 qui enveloppe le corps de buse 32 coaxialement à l'intérieur du puits 5 pour protéger divers dispositifs accessoires, non représentés, tels que des moyens de régulation thermique du corps 32 afin d'assurer à celui-ci une température maintenant la fluidité de la matière à injecter, pendant l'injection. L'enveloppe 106 peut avantageusement être par ailleurs. retenue dans une position coaxiale, au niveau de la bague 31, par un épaulement annulaire 107, de révolution autour de l'axe 4, formant saillie sur la face frontale 47 de la bague 31.

Pour opérer une ouverture et une fermeture commandées du passage 15 au niveau de l'embout 33, à l'intérieur de ce passage 15 est logée coaxialement une aiguille d'obturation 108 dont la forme, connue en elle-même, ne sera pas décrite dans le détail.

On rappellera simplement qu'elle se termine dans le sens 27 par une face frontale 109 plane, perpendiculaire à l'axe 4, en forme de disque de diamètre intermédiaire entre les diamètres extrêmes de la face périphérique intérieure 76 de l'embout 33 alors qu'elle est délimitée, immédiatement en amont de la face frontale 109 en référence au sens 27, par une face périphérique extérieure 110 tronconique de révolution autour de l'axe 4 avec une conicité identique à celle de la face 76 de façon à pouvoir s'appliquer contre cette dernière, dans une relation d'étanchéité mutuelle, dans une position limite de la tige 108 dans le sens 27 par rapport à l'embout 33, laquelle position est par conséquent une position d'obturation du passage 15, et à pouvoir s'écarter de la face 76 par translation suivant l'axe 4 en sens opposé au sens 27, de façon commandée, pour dégager le passage 15 vers l'empreinte 2.

L'aiguille d'obturation 108 est guidée, dans ses mouvements commandés de translation suivant l'axe 4 par rapport au corps de buse 32 vers la position d'ouverture ou la position d'obturation, par la bague 66 précitée, au raccordement entre le corps de buse 32 et l'embout 33.

Par ailleurs, à l'intérieur du passage 23, l'aiguille 108 est guidée au coulissement coaxial dans le support de montage 13 par un prolongement coaxial 111 dans lequel elle est vissée coaxialement ou avec lequel elle est solidarisée par tout autre moyen.

Le prolongement coaxial 111 traverse de part en part le support de montage 13 et présente en dehors du distributeur 11, à l'opposé de la buse par rapport à celui-ci suivant l'axe 4, une extrémité 112 dans laquelle est vissé de façon solidaire mais amovible un boulon 125 portant solidairement une collerette 126, annulaire de révolution autour de l'axe 4, de liaison vis-à-vis d'un mouvement conjoint de translation suivant l'axe 4 avec un organe de transmission de mouvement 113 d'un moyen moteur commandé 114 tel qu'un vérin hydraulique dont l'actionnement commandé permet, par l'intermédiaire de l'organe de transmission 113, soit de tirer sur l'extrémité 112 suivant l'axe 4, en sens opposé au sens 27, pour amener l'aiguille 108 à une position d'ouverture du passage 15 vers l'empreinte 2, soit de pousser l'aiguille 108 pour amener sa face 110 en appui d'étanchéité sur la face 76, c'est-à-dire pour amener l'aiguille 108 en position d'obturation du passage 15.

Le vérin 114 ou autre moyen moteur et l'organe 113 ne seront pas décrits davantage, de même que l'on ne décrira pas d'avantage leur mode de liaison avec la collerette 126 solidarisée de façon amovible avec l'extrémité 112 du prolongement 111 de l'aiguille 108, si ce n'est que l'on précisera que la liaison entre la collerette 126 et l'organe 113 laisse le prolongement 111 de l'aiguille 108, et cette aiguille 108 elle-même, libres de tourner autour de l'axe 4 par rapport à l'organe de transmission 113 et par rapport à l'ensemble formé par le distributeur 11, le support 13 et la buse 10.

A cet égard, le prolongement 111 de la tige 108 est délimité dans le sens d'un éloignement par rapport à l'axe 4 par une face périphérique extérieure 115 cylindrique de révolution autour de l'axe 4, par rapport à laquelle la collerette 126 fait saillie dans le sens d'un éloignement par rapport à cet axe 4, et traverse le support de montage 13 par un trou coaxial 116 lui-même délimité par une face périphérique intérieure 117 cylindrique de révolution autour de l'axe 4, avec un diamètre sensiblement identique à celui de la face 115.

Pour assurer néanmoins une immobilisation de la tige 108 à la rotation autour de l'axe 4 par rapport à l'ensemble formé par le distributeur 11, le support de montage 13 et la buse 10, le prolongement 111 de l'aiguille 108 porte solidairement et de façon amovible, dans une zone située entre le support 13 et l'extrémité 112, une goupille 118 disposée suivant un axe 119 perpendiculaire à l'axe 4, et cette goupille 118 présente deux zones extrêmes en saillie par rapport à la face périphérique extérieure 115 du prolongement 111, respectivement de part et d'autre de celui-ci suivant l'axe 119.

Par ces deux zones extrêmes, la goupille 118 s'engage dans une fente rectiligne respective 120, parallèle à l'axe 4, d'un manchon tubulaire 121 de révolution autour de l'axe 4, que porte solidairement un écrou- capuchon 122 vissé à force sur un embout fileté 123 que le support 13 présente solidairement autour de l'embouchure du trou 116 à l'opposé de la buse 10 par rapport au distributeur 11.

Cet écrou- capuchon 122 sert également à retenir autour de la face périphérique extérieure 115 du prolongement 111 de l'aiguille 108 une bague 124 d'étanchéification vis-à-vis du support de montage 13.

On constate aisément que, dès lors l'écrou 122 est vissé à fond sur l'embout 123 et est par conséquent solidaire de ce dernier bien qu'amovible, la coopération des extrémités de goupille 118 avec les rainures 120 empêche le prolongement 111 de l'aiguille 108, ainsi que cette dernière, de tourner par rapport au support de montage 13 en coopérant avec les rainures 120 à la façon d'un clavetage parallèle à l'axe 4.

Il en résulte une plus grande facilité pour visser ou dévisser le boulon 125 vis-à-vis du prolongement 111 de l'aiguille 108 en vue de raccorder fonctionnellement celle-ci à l'organe de transmission 113 ou de l'en dissocier lors du montage et des opérations de maintenance.

Il en résulte en outre que l'aiguille 108 occupe en permanence et retrouve après démontage et remontage une position angulaire déterminée autour de l'axe 4, par rapport au siège d'étanchéité constitué par la face 76 dans l'exemple illustré ainsi que par rapport à l'empreinte 3, ce qui présente un intérêt tout particulier dans certaines variantes de réalisation du dispositif d'injection, dont un exemple est illustré à la figure 5.

La variante illustrée à la figure 5 ne diffère du mode de mise en oeuvre de l'invention décrit en référence aux figures 1 à 4 que par la conformation de l'aiguille 108 et du passage 15 dans leur zone la plus proche de l'empreinte 2, si bien que l'on retrouve à la figure 5, sous les références numériques 1, 2, 3, 4, 10, 15, 32, 33, 74 à 78, 85, 90, 91, 98, 108, les composants ou parties de composants qui ont été décrits sous ces références à propos du mode de réalisation des figures 1 à 4, soit à l'identique, soit avec des différences indifférentes au regard de la présente invention, soit avec des différences qui vont être décrites à présent.

Dans le cas de ce mode de réalisation, la face tronconique 76 de l'embout 33, délimitant localement le passage 4, ne sert plus de portée d'étanchéité pour l'aiguille 108 et sert simplement de guide à l'introduction de celle-ci dans la partie du passage 15 délimitée par la face cylindrique 77 qui, dans cette variante, constitue la portée d'étanchéité du corps 33 pour l'aiguille 108 lorsqu'elle se trouve en position d'obturation, c'est-à-dire dans la position illustrée à la figure 5.

Complémentairement, au lieu d'être tronconique de révolution autour de l'axe 4, la face périphérique extérieure 110 de la tige 108 est cylindrique de révolution autour de l'axe 4 avec un diamètre sensiblement identique à celui de la face 77 de telle sorte que, dans la position d'obturation illustrée à la figure 5, un contact d'étanchéité vis-à-vis de la matière à l'état plastique s'établisse entre les faces 110 et 77.

Vers l'empreinte 2, la face périphérique extérieure 110 de la tige 108 se raccorde à la face frontale 109 de celle-ci qui, au lieu d'être plane et perpendiculaire à l'axe 4 quelle que soit la forme de la face 3 comme c'est le cas dans le mode de mise en oeuvre décrit en référence aux figures 1 à 4, est conformée de telle sorte que, lorsque l'aiguille 108 occupe la position d'obturation, et est portée à la température qu'elle doit présenter pendant une opération d'injection, cette face 109 s'intègre, au même titre que la face frontale 78 de l'embout 33, à la face 3 du moule 2.

Certes, lorsque la face 3 est plane et perpendiculaire à l'axe 4 dans une zone localisée autour de celui-ci, les faces 78 et 109 sont planes et perpendiculaires à cet axe 4 mais, dans le cas le plus fréquent dans lequel la face 3 est courbe et/ou l'axe 4 ne la coupe pas à angle droit, la face 109 présente, comme la face 78, une forme courbe et/ou une orientation oblique par rapport à l'axe 4 et l'indexage assuré par la coopération des extrémités de la goupille 118 avec les rainures 120 de l'écrou 122,en n'offrant la possibilité d'orienter l'aiguille 108 autour de l'axe 4, par rapport à la buse 10, que dans 2 positions mutuellement décalées de 180° autour de cet axe et dont l'une est clairement erronée, permet de réorienter convenablement la face 109 après chaque démontage de l'aiguille pour que cette face 109 soit susceptible de s'intégrer au mieux, au même titre que la face 78, à la face 3 de l'empreinte 2 lorsque l'aiguille 108 occupe sa position d'obturation.

Naturellement, dans un tel cas, le passage de l'aiguille 108 à sa position d'ouverture du passage 15 vers l'empreinte 2 suppose que l'aiguille s'éloigne suffisamment de cette dernière, suivant l'axe 4, par coulissement en sens opposé au sens 27 à l'intérieur de l'embout 33 et du corps de buse 34, pour permettre à la face 109 de parvenir dans la zone du passage 15 délimitée par la face périphérique intérieure 74.

Dans le cas de cette variante, la position de l'aiguille 108, suivant l'axe 4, correspondant à l'obturation et à l'intégration de sa face 109 à la face 3 de l'empreinte est déterminée, comme la position correspondant à l'ouverture du passage 15 vers l'empreinte 2, par réglage de la course du vérin 114.

Naturellement, d'autres moyens pourraient être utilisés pour assurer l'indexage de l'aiguille 108 par rapport au support 13, de même que d'autres moyens pourraient être utilisés pour assurer l'indexage du support 13 par rapport au distributeur 11, du corps de buse 32 par rapport au support 13 et de l'embout 33 par rapport au corps 32, étant entendu que la présente invention porte sur toute forme d'indexage permettant de donner à une buse 10 y compris, le cas échéant, son aiguille d'obturation 108 et de lui conserver au remontage après démontage une orientation déterminée, autour de son axe 4 confondu avec celui d'un puits d'injection 5, et une position déterminée suivant cet axe, de façon qu'elle s'intègre au mieux à la face 3 de l'empreinte 2 qu'elle est destinée à alimenter.

En particulier, la goupille 49 assurant l'indexage entre le corps de buse 32, le support de montage 13 et le distributeur 11, la goupille 90 assurant l'indexage entre l'embout 33 et le corps de buse 32 et la goupille 118 assurant par clavetage l'indexage de l'aiguille 108 par rapport au distributeur 11, par l'intermédiaire du prolongement 111 de l'aiguille 108 et du manchon tubulaire 121, pourrait être respectivement remplacée par un relief réalisé en monobloc avec l'une des pièces entre lesquelles doit être réalisé l'indexage, étant entendu que seulement l'une ou certaines de ces goupilles pourraient ainsi être remplacées.

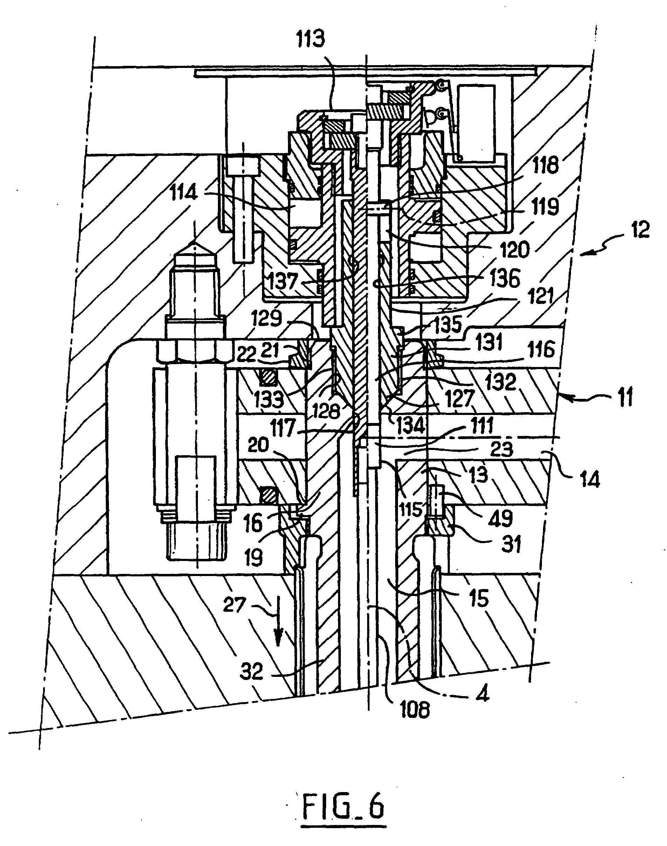

On a ainsi illustré à la figure 6, à laquelle on se référera à présent et sur laquelle on retrouve, sous les mêmes références _numériques, les composants ou parties de composant qui ont été décrits à propos du mode de réalisation des figures 1 à 4, soit à l'identique, soit avec des différences indifférentes au regard de la présente invention, soit avec des différences qui seront décrites par la suite, le remplacement de la goupille 118 par un bossage portant la même référence numérique, réalisé d'une pièce avec le prolongement 111 de l'aiguille d'obturation 108 et formant saillie d'un seul côté de ce prolongement 116, suivant l'axe 119. Ce bossage 118 s'engage, avec possibilité de coulissement parallèlement à l'axe 4 sans possibilité de rotation autour de celui-ci, dans une fente rectiligne 120 alors unique, parallèle à l'axe 4, du manchon tubulaire 121 qui, comme celui qui a été décrit en référence aux figures 1 à 4 ou 5, est solidarisé avec le distributeur 11, toutefois d'une façon différente de celle qui a été décrite en référence aux figures 1 à 4 et sera décrite par la suite.

En effet, la figure 6 illustre des variantes de réalisation d'un certain nombre des composants ou parties de composant qui ont été décrits en référence aux figures 1 à 4 ou 5, étant entendu que l'on pourrait retrouver ces différentes variantes indépendamment l'une de l'autre dans un dispositif d'injection selon l'invention, c'est-à-dire combiner dans la mesure de leur compatibilité les modes de réalisation décrits respectivement en référence aux figures 1 à 4 et à la figure 6, de même qu'en référence à la figure 5.

Une autre variante illustrée à la figure 6, en comparaison avec le mode de réalisation décrit en référence aux figures 1 à 4 ou 5, concerne le montage du corps de buse 32 sur le distributeur 11.

En effet, alors que le distributeur 11 reste inchangé, le support 13 de montage de la buse d'injection 10 sur le distributeur 11 est, dans le mode de réalisation illustré à la figure 6, réalisé en une seule pièce avec le corps 32 dont il constitue un prolongement coaxial, qui s'engage coaxialement dans le passage 16 du distributeur 11 et auquel on a également attribué la référence numérique 13. De la même façon que le support 13 indépendant du corps 32, ce prolongement 13 du corps 32 est retenu solidairement sur le distributeur 11 par les bagues 22 et 31 que l'on retrouve à l'identique ou approximativement à l'identique, et qui sont dans ce cas vissées sur ce prolongement. La bride 19, définissant la face annulaire plane 20 d'appui contre le distributeur 11 dans le sens opposé au sens 27, est alors constituée par une collerette, portant la même référence, réalisée d'une pièce avec le corps 32; la bague 22 conserve son double rôle de fixation, dans ce cas du prolongement 13 du corps 32, sur le distributeur 11 et d'entretoisement vis-à-vis de la semelle 12 alors que la bague 31, perdant sa fonction d'assemblage, ne conserve que sa fonction d'entretoisement entre le distributeur 11 et le moule 1 et la goupille 49, que l'on retrouve à l'identique mais qui pourrait également être réalisée en une pièce avec le corps de buse 32, assure alors exclusivement l'indexage de celui-ci par rapport au distributeur 11.

Dans ce cas, naturellement, c'est le corps de buse 32 qui, lui-même, au niveau de son prolongement 13 inséré à l'intérieur du distributeur 11, définit le passage coudé 23 communiquant avec le passage 14 du distributeur 11 et matérialisant suivant l'axe 4 la sortie de la matière à l'état plastique venant du distributeur 11 vers le passage 15 de la buse 10.

On peut parfaire la solidarisation mutuelle et l'étanchéité entre le prolongement du corps 32 et le distributeur 11, dans le cas du mode de réalisation de la figure 6, ou entre le support 13 indépendant du corps 32 et le distributeur 11, dans le cas du mode de réalisation des figures 1 à 4, ou de celui de la figure 5, en emmanchant respectivement le prolongement 13 du corps 32 ou le support 13, à force et par exemple à chaud, coaxialement dans le trou 16 du distributeur 11.

En association avec un tel engagement direct d'un prolongement 13 du corps 32 dans le trou 16 du corps 11, on pourrait adopter un mode de liaison solidaire du manchon 121 avec ce prolongement du corps 32 identique à celui qui a été décrit en référence aux figures 1 à 4, à propos de la liaison solidaire entre le manchon 121 et le support de montage 13 indépendant du corps 32.

Cependant, on a illustré à la figure 6, comme on l'a indiqué plus haut, un mode de liaison différent en ce sens que le montage assuré dans l'exemple illustré aux figures 1 à 4 par l'écrou- capuchon 122 solidaire du manchon tubulaire 121, l'embout fileté 123 solidaire du support 13 et la bague 124 d'étanchéification entre le prolongement 111 de l'aiguille 108 et le support de montage 13, est remplacé par un montage qui va être décrit à présent, et que l'on pourrait d'ailleurs retrouver entre le manchon 121 et le support de montage 13 indépendant du corps 32 dans un mode de réalisation par ailleurs conforme aux figures 1 à 4 ou 5.

Pour assurer ce montage, la face périphérique intérieure 117 du trou 116 de passage coaxial du prolongement de la tige 108 ne présente une forme cylindrique de révolution autour de l'axe 4, avec un diamètre sensiblement identique à celui de la face périphérique extérieure. 115 du prolongement 111 de la tige 108, que dans une zone directement adjacente au passage 23.

En sens opposé au sens 27, cette face périphérique intérieure 117 se raccorde à une face périphérique intérieure 127 du trou 116, laquelle est tronconique de révolution autour de l'axe 4 et s'évase en sens opposé au sens 27, en formant par rapport à l'axe 4 un angle qui, à titre d'exemple non limitatif, peut être de l'ordre de 45°.

Cette face tronconique 127 se raccorde elle-même, en sens opposé au sens 27, à une face périphérique intérieure 128 du trou 116, laquelle est cylindrique de révolution autour de l'axe 4, avec un diamètre supérieur à celui de la face périphérique intérieure 117 mais inférieur à celui du filetage 21 de réception de la bague 22, et cette face périphérique intérieure 128 se raccorde, en sens opposé au sens 27, à une face annulaire, plane 129, de révolution autour de l'axe 4 auquel elle est perpendiculaire, laquelle face 129 délimite le corps 32 en sens opposé au sens 27.

La face périphérique intérieure 128 présente un taraudage 130 d'axe 4.

Par ce taraudage 130, le corps 32 reçoit de façon solidaire, par vissage coaxial, un bouchon 131 portant solidairement le manchon 121, par exemple par réalisation en une seule pièce.

A cet effet, dans le sens d'un éloignement par rapport à l'axe 4, le bouchon 131 est délimité, sur une dimension supérieure à celle de la face 128, mesurée parallèlement à l'axe 4, par une face périphérique extérieure 132 cylindrique de révolution autour de l'axe 4 et portant un filetage 133 coaxial, complémentaire du taraudage 130 de la face 128. Dans le sens 27, cette face périphérique extérieure 132 se raccorde à une face 138 tronconique de révolution autour de l'axe 4 et directement complémentaire de la face 127 de telle sorte que, en vissant le bouchon 131 à fond dans le trou 116, par coopération du filetage 133 avec le taraudage 130, jusqu'à ce que la face 134 vienne s'appuyer dans le sens 4 sur la face 127, en épousant celle-ci, on puisse solidariser le bouchon 131 avec le corps de buse 32 dans une position relative parfaitement définie, en établissant une étanchéité entre eux. Dans le sens opposé au sens 27, à la jonction entre le bouchon 131 et le manchon 121, la face périphérique extérieure 132 se raccorde à une collerette 135 réalisée d'une pièce avec le bouchon 131 et le manchon 121, laquelle collerette 135 est indifférente au regard de la présente invention et est conçue de façon à ne pas entraver la possibilité de contact mutuel entre les faces 134 et 127 lorsque le bouchon 131 est vissé à fond dans le trou 116.

Vers l'axe 4, le bouchon 131 et le manchon 121 sont délimités par des zones respectives d'une même face périphérique intérieure 136 cylindrique de révolution autour de l'axe 4 avec un diamètre aussi voisin que possible que celui de la face périphérique extérieure 115 du prolongement 111 de l'aiguille 108 afin d'assurer un guidage au coulissement relatif suivant l'axe 4. Pour assurer une étanchéité entre les faces 115 et 136 vis-à-vis de la matière thermoplastique évoluant notamment dans le passage 23, la face 136 est creusée d'au moins une gorge 137 annulaire de révolution autour de l'axe 4, disposée à un niveau intermédiaire entre la fente 120 du manchon 121 et le bouchon 131 et propre à recevoir un matériau d'étanchéité.

Enfin, le mode de réalisation illustré à la figure 6 se distingue de celui qui a été décrit en référence aux figures 1 à 4 ou 5 par le mode de réalisation du vérin 114 et de l'organe de transmission de mouvement 113.

En effet, alors que le vérin 114 est disposé latéralement, perpendiculairement à l'axe 4 et que l'organe de transmission 113 comporte un renvoi d'angle à 90° dans l'exemple décrit en référence aux figures 1 à 4 ou 5, le vérin 114 est un vérin coaxial à aiguille 108 et l'organe de transmission 113 assure une liaison sans jeu suivant l'axe 4 avec le prolongement 111 de l'aiguille 108 avec possibilité de débattement relatif perpendiculairement à cet axe dans le cas du mode de réalisation illustré à la figure 6, d'une façon également connue d'un Homme du métier et de ce fait non décrite dans le détail. Les moitiés de gauche et de droite de la figure 6 illustrent le vérin 114 et l'aiguille 108 dans deux positions limites, par rapport au distributeur 11 et au corps de buse 32, ces positions correspondant respectivement à l'obturation du passage 15 au niveau de l'embout de buse 33, comme on l'a décrit en référence aux figures 1 à 4 et 5, avec intégration de la face frontale 109 de l'aiguille 108 à la face 3 de l'empreinte de moulage 2 dans le cas d'un mode de réalisation conforme à la figure 5, et à l'ouverture du passage 15 vers l'empreinte de moulage 2.

Il est bien entendu que cette conception du vérin 114 et de l'organe de transmission 113 pourrait également être adoptée dans le cadre d'un dispositif selon l'invention par ailleurs conçu tel qu'il a été décrit en référence aux figures 1 à 4 ou 5, de même que le vérin 114 et l'organe de transmission 113 illustrés à la figure 1 pourraient être adoptés, aux lieu et place de ceux qui ont été décrits en référence à la figure 6, en liaison avec un dispositif selon l'invention par ailleurs conforme à ce qui a été décrit en référence à cette figure 6.

Cependant, les variantes de réalisation du dispositif selon l'invention ne se limitent pas à une combinaison des variantes compatibles, décrites respectivement en référence aux figures 1 à 4, à la figure 5 et à la figure 6, et de nombreuses autres variantes pourraient être apportées aux dispositions qui viennent d'être décrites sans que l'on sorte pour autant du cadre de la présente invention.

## Revendications

1. Dispositif d'injection de matière à l'état plastique dans une empreinte de moulage (2), comportant notamment :
- un distributeur (11) de matière à l'état plastique, comportant au moins une sortie (23) de matière à l'état plastique, disposée suivant un axe déterminé (4),
- une buse d'injection (10) comportant au moins un composant (33) qui est lié au distributeur (11) par un moyen de solidarisation amovible et définit pour la buse d'injection (10) une face frontale (78) conformée de façon à s'intégrer à l'empreinte de moulage (2), la buse d'injection (10) comportant au moins un passage (15) de matière à l'état plastique, disposé suivant ledit axe (4), placé en relation fluidique avec ladite sortie (23) et débouchant dans ladite face frontale (78),
- des moyens commandés (108), (113), (114) d'obturation dudit passage (15),
**caractérisé en ce que** ledit moyen de solidarisation amovible comporte :
- des moyens (49, 54, 56, 59, 90, 95, 99) d'indexage de la position angulaire de ladite face frontale (78) par rapport au distributeur (11), autour dudit axe (4), et
- des moyens de verrouillage (31, 85) fixant ladite face frontale (78) par rapport au distributeur (11) dans la position angulaire relative imposée par les moyens d'indexage (49, 50, 56, 59, 90, 95, 99).

2. Dispositif selon la revendication 1, **caractérisé en ce que** la buse d'injection (10) comporte notamment un embout de buse (33) définissant ladite face frontale (78) et un corps de buse (32) intercalé entre le distributeur (11) et l'embout de buse (33) et lié à l'un et l'autre par un moyen de solidarisation respectif dont l'un, au moins, est un moyen de solidarisation amovible et comporte :
- des moyens (49, 54, 56, 59, 90, 95, 99) d'indexage en position angulaire relative autour dudit axe (4),
- des moyens (31, 85) de verrouillage mutuel dans la position angulaire relative imposée par les moyens d'indexage (49, 54, 56, 59, 90, 95, 99).

3. Dispositif selon la revendication 2, **caractérisé en ce que** le distributeur (11) comporte un passage (16) de montage du corps de buse (32), aménagé suivant ledit axe (4), et **en ce que** le corps de buse (32) est engagé coaxialement dans ledit passage (16) et définit ladite sortie(23).

4. Dispositif selon l'une quelconque des revendications 1 et 2, **caractérisé en ce que** le distributeur (11) comporte un passage (16) de montage d'un support (13) de montage de la buse d'injection (10), aménagé suivant ledit axe (4), et un support (13) de montage de la buse d'injection (10), engagé coaxialement dans ledit passage (16), définissant ladite sortie(23) et lié au distributeur (11) et à la buse d'injection (10) par un moyen de solidarisation respectif dont l'un, au moins, est un moyen de solidarisation amovible et comporte :
- des moyens (49, 54, 56, 59) d'indexage en position angulaire relative autour dudit axe (4),
- des moyens (31) de verrouillage mutuel dans la position angulaire relative imposée par les moyens d'indexage (49, 54, 56, 59).

5. Dispositif selon l'une quelconque des revendications 1 à 4, **caractérisé en ce que** les moyens d'indexage (49, 54, 56, 59, 90, 95, 99) comportent un goupillage (49, 90) parallèle au dit axe (4).

6. Dispositif selon la revendication 5 dans sa relation de dépendance vis-à-vis de la revendication 4, **caractérisé en ce que** le support (13) de montage de la buse d'injection (10)est lié au distributeur (11) et à la buse d'injection (10) par un moyen de solidarisation (31, 49, 54, 56, 59) comportant :
- des moyens (49, 54, 56, 59) d'indexage en position angulaire relative autour dudit axe (4),
- des moyens (31) de verrouillage mutuel dans la position angulaire relative imposée par les moyens d'indexage (49, 54, 56, 59),
et **en ce que** le goupillage (49, 90) est commun aux moyens (49, 54, 56, 59) d'indexage du support de montage (13) en position angulaire par rapport au distributeur (11) et aux moyens (49, 54, 56, 59) d'indexage de la buse d'injection (10) en position angulaire par rapport au support de montage (13).

7. Dispositif selon l'une quelconque des revendications 1 à 6, **caractérisé en ce que** les moyens de verrouillage mutuel (31, 85) comportent un bridage mutuel par bague (31, 85) annulaire de révolution autour dudit axe (4), vissée par rotation autour de celui-ci.

8. Dispositif selon l'une quelconque des revendications 1 à 7, **caractérisé en ce que** les moyens commandés (108) d'obturation comportent au moins une aiguille d'obturation (108) montée au coulissement axial à l'intérieur dudit passage (15), entre une position d'obturation de celui-ci et une position d'ouverture de celui-ci, des moyens commandés (113, 114) pour faire coulisser l'aiguille (108) de l'une à l'autre desdites positions, situés à l'opposé de la buse d'injection (10) par rapport au distributeur (11) suivant ledit axe (4) et comportant des moyens moteurs commandés (114), un organe (113) de transmission de mouvement entre les moyens moteurs (114) et l'aiguille (108), disposé dans le prolongement axial de celle-ci, et un moyen (125, 126) de solidarisation amovible dudit organe (113) et de l'aiguille (108) dans une direction axiale, autorisant une libre rotation relative autour dudit axe (4), et des moyens (118, 120) d'indexage de l'aiguille (108) par rapport au distributeur (11) dans une position angulaire relative prédéterminée autour dudit axe (4).

9. Dispositif selon la revendication 8 dans sa relation de dépendance vis-à-vis de la revendication 3, **caractérisé en ce que** les moyens (118, 120) d'indexage de l'aiguille (108) par rapport au distributeur (11) sont des moyens (118, 120) d'indexage de l'aiguille (108) par rapport au corps de buse (32).

10. Dispositif selon la revendication 8 dans sa relation de dépendance vis-à-vis de la revendication 4, **caractérisé en ce que** les moyens (118, 120) d'indexage de l'aiguille (108) par rapport au distributeur (11) sont des moyens (118, 120) d'indexage de l'aiguille (108) par rapport au support (13) de montage de la buse d'injection (10).

11. Dispositif selon l'une quelconque des revendications 8 à 10, **caractérisé en ce que** les moyens d'indexage (118, 120) comportent un clavetage parallèle au dit axe (4).

12. Dispositif selon l'une quelconque des revendications 8 à 11, **caractérisé en ce que** l'aiguille d'obturation (108) comporte une face frontale (109) conformée de façon à s'intégrer à l'empreinte de moulage (2) dans sa position d'obturation dudit passage (15).

## Patentansprüche

1. Vorrichtung zum Einspritzen von Material in plastischem Zustand in eine Gießform (2), die insbesondere Folgendes aufweist:
- einen Verteiler (11) von Material in plastischem Zustand, der mindestens einen Ausgang (23) für Material in plastischem Zustand aufweist, welcher entlang einer festgelegten Achse (4) angeordnet ist,
- eine Einspritzdüse (10) mit mindestens einem Bestandteil (33), der über ein Mittel zur abnehmbaren Verdindung mit dem Verteiler (11) verbunden ist und für die Einspritzdüse (10) eine Vorderseite (78) festlegt, die so geformt ist, dass sie sich in die Gießform (2) einfügt, wobei die Einspritzdüse (10) mindestens einen Durchgang (15) für Material in plastischem Zustand aufweist, der entlang der Achse (4) angeordnet ist, in Fluidik-Beziehung mit dem Ausgang (23) steht und in die Vorderseite (78) mündet,
- gesteuerte Mittel (108), (113), (114) zum Verschließen des Durchgangs (15),
**dadurch gekennzeichnet dass** das Mittel zur abnehmbaren Verdindung Folgendes aufweist :
- Mittel (49, 54, 56, 59, 90, 95, 99) zur Indizierung der Winkelposition der Vorderseite (78) in Bezug auf den Verteiler (11) um die Achse (4) und
- Verriegelungsmittel (31, 85), die die Vorderseite (78) in Bezug auf den Verteiler (11) in der von den Indizierungsmitteln (49, 50, 56, 59, 90, 95, 99) vorgegebenen relativen Winkelposition befestigen.

2. Vorrichtung nach Anspruch 1, **dadurch gekennzeichnet, dass** die Einspritzdüse (10) insbesondere einen Düsenansatz (33), der die Vorderseite (78) festlegt, und einen Düsenkörper (32) aufweist, der zwischen dem Verteiler (11) und dem Düsenansatz (33) angeordnet und mit dem einen und dem anderen über jeweils ein Verbindungsmittel verbunden ist, von denen mindestens eines ein Mittel zur abnehmbaren Verdindung ist und Folgendes aufweist :
- Mittel (49, 54, 56, 59, 90, 95, 99) zur Indizierung in der relativen Winkelposition um die Achse (4),
- Mittel (31, 85) zum gegenseitigen Verriegeln in der von den Indizierungsmitteln (49, 54, 56, 59, 90, 95, 99) vorgegebenen relativen Winkelposition.

3. Vorrichtung nach Anspruch 2, **dadurch gekennzeichnet, dass** der Verteiler (11) einen Durchgang (16) zur Montage des Düsenkörpers (32) aufweist, der entlang der Achse (4) angeordnet ist, und dadurch, dass der Düsenkörper (32) koaxial in dem Durchgang (16) eingefügt ist und den Ausgang (23) festlegt.

4. Vorrichtung nach Anspruch 1 oder 2, **dadurch gekennzeichnet, dass** der Verteiler (11) einen Durchgang (16) zur Montage eines Trägers (13) zur Montage der Einspritzdüse (10), der entlang der Achse (4) angeordnet ist, und einen Träger (13) zur Montage der Einspritzdüse (10) aufweist, der koaxial im Durchgang (16) eingefügt ist, den Ausgang (23) festlegt und mit dem Verteiler (11) und der Einspritzdüse (10) über jeweils ein Verbindungsmittel verbunden ist, von denen mindestens eines ein Mittel zur abnehmbaren Verdindung ist und Folgendes aufweist:
- Mittel (49, 54, 56, 59) zur Indizierung in der relativen Winkelposition um die Achse (4),
- Mittel (31) zum gegenseitigen Verriegeln in der von den Indizierungsmitteln (49, 54, 56, 59) vorgegebenen relativen Winkelposition.

5. Vorrichtung nach einem der Ansprüche 1 bis 4, **dadurch gekennzeichnet, dass** die Indizierungsmittel (49, 54, 56, 59, 90, 95, 99) eine Stift-Befestigung (49, 90) parallel zur Achse (4) aufweisen.

6. Vorrichtung nach Anspruch 5 in seiner Abhängigkeitsbeziehung zu Anspruch 4, **dadurch gekennzeichnet, dass** der Träger (13) zur Montage der Einspritzdüse (10) über ein Verbindungsmittel (31, 49, 54, 56, 59) mit dem Verteiler (11) und der Einspritzdüse (10) verbunden ist, das Folgendes aufweist:
- Mittel (49, 54, 56, 59) zur Indizierung in der relativen Winkelposition um die Achse (4),
- Mittel (31) zum gegenseitigen Verriegeln in der von den Indizierungsmitteln (49, 54, 56, 59) vorgegebenen relativen Winkelposition,
und dadurch, dass die Stift-Befestigung (49, 90) den Mitteln (49, 54, 56, 59) zur Indizierung des Montageträgers (13) in der Winkelposition in Bezug auf den Verteiler (11) und den Mitteln (49, 54, 56, 59) zur Indizierung der Einspritzdüse (10) in der Winkelposition in Bezug auf den Montageträger (13) gemeinsam ist.

7. Vorrichtung nach einem der Ansprüche 1 bis 6, **dadurch gekennzeichnet, dass** die Mittel zum gegenseitigen Verriegeln (31, 85) eine Anflanschung aneinander durch einen um die Achse (4) drehbaren Ring (31, 85) aufweisen, der durch Drehung um diese angeschraubt wird.

8. Vorrichtung nach einem der Ansprüche 1 bis 7, **dadurch gekennzeichnet, dass** die gesteuerten Verschlussmittel (108) mindestens eine Verschlussnadel (108) aufweisen, die im Durchgang (15) axial zwischen einer Position, in der dieser verschlossen ist, und einer Position, in der er geöffnet ist, verschiebbar montiert ist, sowie gesteuerte Mittel (113, 114), um die Nadel (108) von der einen in die andere Position zu bewegen, die in Bezug auf den Verteiler (11) entlang der Achse (4) gegenüber der Einspritzdüse (10) angeordnet sind und gesteuerte Antriebsmittel (114), ein Organ (113) zur Bewegungsübertragung zwischen den Antriebsmitteln (114) und der Nadel (108), das in der axialen Verlängerung von dieser angeordnet ist, sowie ein Mittel (125, 126) zur abnehmbaren Verbindung des Organs (113) mit der Nadel (108) in einer axialen Richtung aufweisen, das eine freie relative Drehung um die Achse (4) erlaubt, und darüber hinaus Mittel (118, 120) zur Indizierung der Nadel (108) in Bezug auf den Verteiler (11) in einer vorher festgelegten relativen Winkelposition um die Achse (4).

9. Vorrichtung nach Anspruch 8 in seiner Abhängigkeitsbeziehung zu Anspruch 3, **dadurch gekennzeichnet, dass** die Mittel (118, 120) zur Indizierung der Nadel (108) in Bezug auf den Verteiler (11) Mittel (118, 120) zur Indizierung der Nadel (108) in Bezug auf den Düsenkörper (32) sind.

10. Vorrichtung nach Anspruch 8 in seiner Abhängigkeitsbeziehung zu Anspruch 4, **dadurch gekennzeichnet, dass** die Mittel (118, 120) zur Indizierung der Nadel (108) in Bezug auf den Verteiler (11) Mittel (118, 120) zur Indizierung der Nadel (108) in Bezug auf den Träger (13) zur Montage der Einspritzdüse (10) sind.

11. Vorrichtung nach einem der Ansprüche 8 bis 10, **dadurch gekennzeichnet, dass** die Mittel zur Indizierung (118, 120) eine zur Achse (4) parallele Keilverbindung aufweisen.

12. Vorrichtung nach einem der Ansprüche 8 bis 11, **dadurch gekennzeichnet, dass** die Verschlussnadel (108) eine Vorderseite (109) aufweist, die so geformt ist, dass sie sich in der Position, in der sie den Durchgang (15) verschließt, in die Gießform (2) einfügt.

## Claims

1. Device for injecting material in a plastic state into a moulding cavity (2), comprising particularly:
- a distributor (11) of material in a plastic state, comprising at least one outlet (23) for material in a plastic state, placed along a preset axis (4),
- an injection nozzle (10) comprising at least one component (33) which is connected to the distributor (11) by a detachable connection means and defines for the injection nozzle (10) a front surface (78) configured in such a way as to become integral with the moulding cavity (2), the injection nozzle (10) comprising at least one channel (15) for material in a plastic state, placed along the said axis (4), placed in a fluid relationship with the said outlet (23) and emerging in the said front surface (78),
- controlled means (108), (113), (114) of blanking the said channel (15),
**characterized in that** the said detachable connection means comprises:
- means (49, 54, 56, 59, 90, 95, 99) of indexing the angular position of the said front surface (78) in relation to the distributor (11), around the said axis (4), and
- locking means (31, 85) fixing the said front surface (78) in relation to the distributor (11) in the relative angular position imposed by the indexing means (49, 50, 56, 59, 90, 95, 99).

2. Device according to Claim 1, **characterized in that** the injection nozzle (10) comprises particularly a nozzle end piece (33) defining the said front surface (78) and a nozzle body (32) inserted between the distributor (11) and the nozzle end piece (33) and connected to one and the other by a respective connection means one of which, at least, is a detachable connection means and comprises:
- means (49, 54, 56, 59, 90, 95, 99) of indexing in a relative angular position around the said axis (4),
- means (31, 85) of mutual locking in the relative angular position imposed by the indexing means (49, 54, 56, 59, 90, 95, 99).

3. Device according to Claim 2, **characterized in that** the distributor (11) comprises a channel (16) for assembling the nozzle body (32), provided along the said axis (4), and **in that** the nozzle body (32) is engaged coaxially in the said channel (16) and defines the said outlet (23).

4. Device according to either of Claims 1 and 2, **characterized in that** the distributor (11) comprises a channel (16) for assembling a support (13) for assembling the injection nozzle (10), provided along the said axis (4), and a support (13) for assembling the injection nozzle (10), engaged coaxially in the said channel (16), defining the said outlet (23) and connected to the distributor (11) and to the injection nozzle (10) by a respective connection means one of which, at least, is a detachable connection means and comprises:
- means (49, 54, 56, 59) of indexing in a relative angular position around the said axis (4),
- means (31) of mutual locking in the relative angular position imposed by the indexing means (49, 54, 56, 59).

5. Device according to any one of Claims 1 to 4, **characterized in that** the indexing means (49, 54, 56, 59, 90, 95, 99) include cottering (49, 90) parallel to the said axis (4).

6. Device according to Claim 5 in its relation of dependence in respect of Claim 4, **characterized in that** the support (13) for assembling the injection nozzle (10) is connected to the distributor (11) and to the injection nozzle (10) by a connection means (31, 49, 54, 56, 59) comprising:
- means (49, 54, 56, 59) of indexing in a relative angular position around the said axis (4),
- means (31) of mutual locking in the relative angular position imposed by the indexing means (49, 54, 56, 59),
and **in that** the cottering (49, 90) is common to the mean (49, 54,56, 59) of indexing the assembling support (13) in an angular position relative to the distributor (11) and to the means (49, 54, 56, 59) of indexing the injection nozzle (10) in an angular position relative to the assembly support (13).

7. Device according to any one of Claims 1 to 6, **characterized in that** the mutual locking means (31, 85) comprise mutual clamping by an annular ring (31, 85) axisymmetric with respect to the said axis (4), the said ring being screwed by rotation about the latter.

8. Device according to any one of the Claims 1 to 7, **characterized in that** the controlled blanking means (108) comprise at least one blanking pin (108) mounted with axial sliding inside the said channel (15), between a blanking position of the latter and an open position of the latter, controlled means (113, 114) to make the pin (108) slide from one to the other of the said positions, located on the opposite side from the injection nozzle (10) relative to the distributor (11) along the said axis (4) and comprising controlled drive means (114), a component (113) for transmitting motion between the drive means (114) and the pin (108), placed in the axial extension of the latter, and a means (125, 126) of detachable connection of the said component (113) and of the pin (108) in an axial direction, allowing a relative free rotation around the said axis (4), and means (118, 120) of indexing the pin (108) relative to the distributor (11) in a preset relative angular position around the said axis (4).

9. Device according to claim 8 in its relation of dependence in respect of Claim 3, **characterized in that** the means (118, 120) of indexing the pin (108) relative to the distributor (11) are means (118, 120) of indexing the pin (108) relative to the injection nozzle (32).

10. Device according to Claim 8 in its relation of dependence in respect of Claim 4, **characterized in that** the means (118, 120) of indexing the pin (108) relative to the distributor (11) are means (118, 120) of indexing the pin (108) relative to the support (13) for assembling the injection nozzle (10).

11. Device according to any one of Claims 8 to 10, **characterized in that** the indexing means (118, 120) include cottering parallel to the said axis (4).

12. Device according to any one of Claims 8 to 11, **characterized in that** the blanking pin (108) comprises a front surface (109) configured in such a way that it can become integral with the moulding cavity (2) in its position of blanking the said channel (15).
